(19) **Europäisches Patentamt European Patent Office Office européen des brevets**

(11) **EP 3 564 084 A1**

(12) **EUROPEAN PATENT APPLICATION**
published in accordance with Art. 153(4) EPC

(43) Date of publication:
06.11.2019  Bulletin 2019/45

(51) Int Cl.:
*B60W 30/17* (2012.01)    *B60W 30/18* (2012.01)
*B60W 40/04* (2006.01)    *G08G 1/09* (2006.01)
*G08G 1/16* (2006.01)

(21) Application number: 17886701.6

(22) Date of filing: 19.12.2017

(86) International application number:
PCT/JP2017/045436

(87) International publication number:
WO 2018/123706 (05.07.2018 Gazette 2018/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 28.12.2016  JP 2016254651

(71) Applicant: Hitachi Automotive Systems, Ltd.
Hitachinaka-shi
Ibaraki 312-8503 (JP)

(72) Inventors:
• OKUDA, Yuuki
Tokyo 100-8280 (JP)

• IMANISHI, Yuto
Tokyo 100-8280 (JP)
• IIHOSHI, Yoichi
Tokyo 100-8280 (JP)
• TASHIRO, Naoyuki
Hitachinaka-shi
Ibaraki 312-8503 (JP)
• OKADA, Takashi
Hitachinaka-shi
Ibaraki 312-8503 (JP)

(74) Representative: Strehl Schübel-Hopf & Partner
Maximilianstrasse 54
80538 München (DE)

(54) **VEHICLE CONTROL DEVICE**

(57)    The purpose of the present invention is to make it possible to minimize worsening of fuel consumption and loss of drivability. To achieve this purpose, it is proposed to use a vehicle control device characterized by having a vehicle behavior distribution information generating unit that generates preceding vehicle behavior distribution information in a given location on a road on the basis of travel histories of a plurality of vehicles, a preceding vehicle behavior information detection unit that detects behavior information of a preceding vehicle immediately ahead, a comparison unit that compares the vehicle behavior distribution information and the preceding vehicle behavior information, and a control unit that controls the host vehicle on the basis of the result of comparison from the comparison unit.

*FIG. 3*

**Description**

Technical Field

The present invention relates to a vehicle control device, for example, a front recognition sensor and an automatic acceleration/deceleration control using probe information.

Background Art

In recent years, there is developed an automatic acceleration/deceleration control in which a preceding vehicle is recognized using a front recognition sensor such as a camera and a radar, and the acceleration/deceleration is controlled to be kept an inter-vehicle distance to preceding vehicle. The automatic acceleration/deceleration control lowers the output of an engine in a case where the vehicle approaches the preceding vehicle, or increases a hydraulic pressure of a friction brake to slow down so as to extend the inter-vehicle distance to the preceding vehicle. In addition, in a case where the inter-vehicle distance to the preceding vehicle is extended or a case where the preceding vehicle deviates from a traveling road of a host vehicle, the output of the engine is increased and the vehicle is accelerated up to a predetermined speed. With this configuration, the vehicle can travel along with other vehicles while keeping the inter-vehicle distance not to come into conflict to the preceding vehicle.

There is known a technique of improving fuel consumption by suppressing acceleration/deceleration during the traveling in the automatic acceleration/deceleration. The loss caused by the friction brake is reduced by suppressing the acceleration/deceleration, and the engine can operate at a high-efficient operation point, so that the fuel consumption of the vehicle can be improved.

The device disclosed in PTL 1 is an example in which the vehicle travels while suppressing the acceleration/deceleration compared to a normal mode in a case where the host vehicle is set to an eco-mode. With this configuration, the fuel consumption of the vehicle can be improved.

In addition, PTL 2 discloses a technique of traveling the vehicle in a tracking state while disconnecting a clutch.

Citation List

Patent Literature

PTL 1: JP 2009-113763 A
PTL 2: JP 2014-255320 A

Summary of Invention

Technical Problem

In a case where the control is performed on the basis of a relation between a preceding vehicle and a host vehicle as described above, the characteristics of control are collectively changed to meet desired purposes as described in the prior patent literature. In addition, if the traveling control is performed to disconnect the clutch and stop the engine during traveling on the basis of a speed change of the preceding vehicle, the fuel consumption may be worsened and drivability may be lowered. In other words, there is room for improvement in the effects obtained in the method of the related art.

The invention has been made in view of the above problems, and an object thereof is to provide a traveling control which can inhibit fuel consumption from being degraded and drivability from being lowered.

Solution to Problem

In order to achieve this purpose, the invention proposes "a vehicle control device which includes a vehicle behavior information generation unit which generates preceding vehicle behavior information at a given location on a road on the basis of travel histories of a plurality of vehicles, a preceding vehicle behavior information detection unit which detects behavior information of the preceding vehicle, a comparison unit which compares the preceding vehicle behavior information and the preceding vehicle behavior information detection unit, and a control unit which controls a host vehicle on the basis of a result of comparison of the comparison unit".

Advantageous Effects of Invention

According to the solution of the invention, a purpose for which a vehicle preceding a host vehicle at a certain point has changed its speed is estimated. Comparing the estimation with an actual behavior of the preceding vehicle, a probability of the estimation is evaluated. In a case where the preceding vehicle travels according to the estimation, the corresponding traveling control can be performed. Therefore, worsening of fuel consumption can be suppressed. It is possible to provide a traveling control which can inhibit the drivability from being worsened.

The other configurations, operations, and effects of the invention will be described in detail in the following embodiments.

Brief Description of Drawings

FIG. 1 is a diagram illustrating a configuration of a vehicle on which a vehicle control device in a first embodiment of the invention is mounted.
FIG. 2 is a diagram illustrating a configuration of the vehicle control device in the first embodiment of the invention.
FIG. 3 is a diagram illustrating a configuration of an acceleration/deceleration control device in the first embodiment of the invention.
FIG. 4 is a control flow of the control device of a vehicle in the first embodiment of the invention.
FIG. 5 is a generation flow of preceding vehicle behavior distribution information in the first embodiment of the invention.
FIG. 6 is a diagram illustrating a creating procedure of the preceding vehicle behavior distribution information in the first embodiment of the invention.
FIG. 7 is a flow of control on the basis of preceding vehicle behavior comparison in the first embodiment of the invention.
FIG. 8 is a diagram illustrating an example of gain adjustment of a target driving force calculation unit in a fourth embodiment of the invention.
FIG. 9 is a diagram illustrating a comparative example where fuel consumption is worsened in a case where the vehicle travels a sag part in a fifth embodiment of the invention.
FIG. 10 is a diagram for describing an effect of the invention in a case where the vehicle travels the sag part in the fifth embodiment of the invention.
FIG. 11 is a diagram for describing an example of the performance of a generator in a sixth embodiment of the invention.
FIG. 12 is a diagram for describing an example of a case where a lateral vehicle in a seventh embodiment of the invention crosses over into a lane where a host vehicle travels.
FIG. 13 is a diagram for describing an example where the vehicles are successful in communication in a tenth embodiment of the invention.
FIG. 14 is a diagram for describing a procedure of testing communication with a vehicle which is unable to communicate with vehicles in the tenth embodiment of the invention.

Description of Embodiments

Hereinafter, embodiments of the invention will be described with reference to the accompanying drawings.
The specific numerical values described in the embodiments are given as merely exemplary in order to help with explanation of the invention, and the invention is not limited thereto if not otherwise specified. In addition, the drawings do not illustrate details of functions, configurations, and dimensions, and redundant elements and functions having no direct relation will be omitted from the drawings. Controls and functions not described in a certain embodiment of the invention may be achieved using a technique of the related art.
A vehicle having an engine as the only driving source will be exemplified as an embodiment of the invention, but the invention is not limited to the driving source of the vehicle. As a driving source of the vehicle, an electrical motor may be provided, or both of the engine and the electrical motor may be provided. For example, the invention may be an electric vehicle or a hybrid electric vehicle, not limited to a car, but may be applied to a loaded vehicle such as a truck or a van such as a bus.

First Embodiment

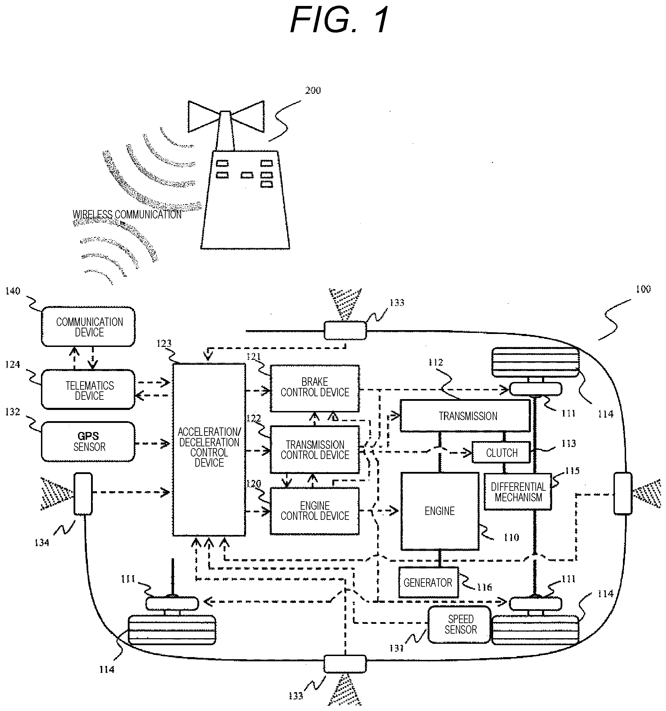

FIG. 1 is a diagram illustrating a configuration of a vehicle 100 where a vehicle control device according to a first embodiment is mounted.

The vehicle 100 includes an engine 110 (power source), a brake 111 which brakes the vehicle, a transmission 112 which continuously shifts a drive force generated by the engine 110 to an appropriate speed, a clutch 114 which transfers the drive force between the transmission 112 and a wheel 113, an engine control device 120 which controls a throttle body (not illustrated), a fuel injection device, and an ignition device for the engine 110 to generate a desired drive force, a brake control device 121 which adjusts a braking force of the vehicle 100 by the brake 111 by controlling a hydraulic pressure of the brake 111, a transmission control device 122 which adjusts a transmission ratio of the transmission 112 and controls power transfer of the clutch 114, a front recognition sensor 130 which detects an object on the front side of the vehicle 100, a speed sensor 131 which detects the speed of the vehicle 100, an acceleration/deceleration control device 123 which controls the operation to the engine control device 120, the brake control device 121, and the transmission control device 122, a GPS sensor 132 which detects position information of the vehicle 100, a communication device 140 which is able to communicate with a data center 200, and a telematics device 124 which manages data transferred between the communication device 140 and the data center 200.

The engine 110 injects fuel to obtain power from chemical energy of the fuel. The generated power is transferred to the transmission 112, and rotates the right and left wheels 113 through the clutch 114 and a differential mechanism 115 after being shifted by a winding transfer mechanism in the transmission 112. The vehicle 100 travels by a rotational force of the wheel 113.

The brake 111 is provided near the wheel 113 to apply the braking force to the vehicle. A brake disk (not illustrated) is provided which rotates together with the brake wheel 113. When the sliding surface of the brake disk is pressed with a friction body, the rotational force of the brake disk is converted to friction heat and the kinetic energy is converted to the thermal energy to generate the braking force. With such an operation, the vehicle 100 can be braked.

The engine control device 120 includes a calculation device which performs various types of programs required to control the engine 110, a primary storage device which stores a procedure of calculation and a calculation result, a secondary storage device which stores the programs and various types of control constants, an I/O port through which a command is transmitted to the throttle body (not illustrated) belonging to the engine 110, a fuel injection valve, and the ignition device, and the communication can be made to various types of control devices including the acceleration/deceleration control device 122, and an A/D converter which receives a measured value of an air flow meter (not illustrated) which measures the vehicle speed from the speed sensor 131 and an air amount flowing into the engine 110.

The engine control device 120 performs a program to change an intake air amount and a fuel injection amount so as to generate a desired drive force of the engine 110. The engine 110 consumes the chemical energy of the fuel to be converted into the thermal energy, expands the intake air, converts a force pushing down a piston into the rotational force through a crank mechanism using the pressure so as to obtain the drive force, so that the engine 110 can be controlled to a desired power state by changing the intake air amount and the fuel injection amount.

Similarly to the engine control device 120, the brake control device 121 includes the calculation device, the primary and secondary storage devices, the I/O port, and the A/D converter. A level of pushing the friction body to the brake disk is changed by controlling the hydraulic pressure supplied to the brake 111. Then, the kinetic energy to be converted into the thermal energy is changed by the brake 111, so that a desired braking force can be obtained.

Similarly to the engine control device 120 to the brake control device 121, a transmission control device 122 includes the calculation device, the primary and secondary storage devices, the I/O port, and the A/D converter. The transmission 112 includes at least two corn groups which can change the diameter of the winding portion by adjusting a gap between the corns with the vertex facing each other using the hydraulic pressure, and includes the winding transfer mechanism which obtains a desired deceleration ratio by individually controlling diameters of the winding portions of the two groups. In other words, the transmission control device 122 controls the hydraulic pressure to obtain a desired deceleration ration so as to convert the drive force of the engine 110 into an appropriate rotation speed and torque, and transfers the speed and torque to the differential mechanism 115 and the wheel 113, so that the drive force of the engine 110 can be supplied for the vehicle 100 to travel with efficiency.

Similarly to the engine control device 120, the acceleration/deceleration control device 123 also includes the calculation device, the primary and secondary storage devices, the I/O port, and the A/D converter. The acceleration/deceleration control device 123 controls a braking and driving force to the engine control device 120, the brake control device 121, and the transmission control device 122 using recognition information of the front recognition sensor 130 and a speed signal from the speed sensor 131. When an inter-vehicle distance to a preceding vehicle (not illustrated) detected by the front recognition sensor 130 is shortened, the vehicle is controlled to be decelerated. On the other hand, when the inter-vehicle distance to the preceding vehicle detected by the front recognition sensor 130 is increased, and in a case where a preceding vehicle is not recognized, the vehicle is controlled to be accelerated up to a predetermined speed. With this configuration, it is possible to control the traveling of the vehicle 100 in accordance with the surrounding vehicles without approaching the preceding vehicle too close.

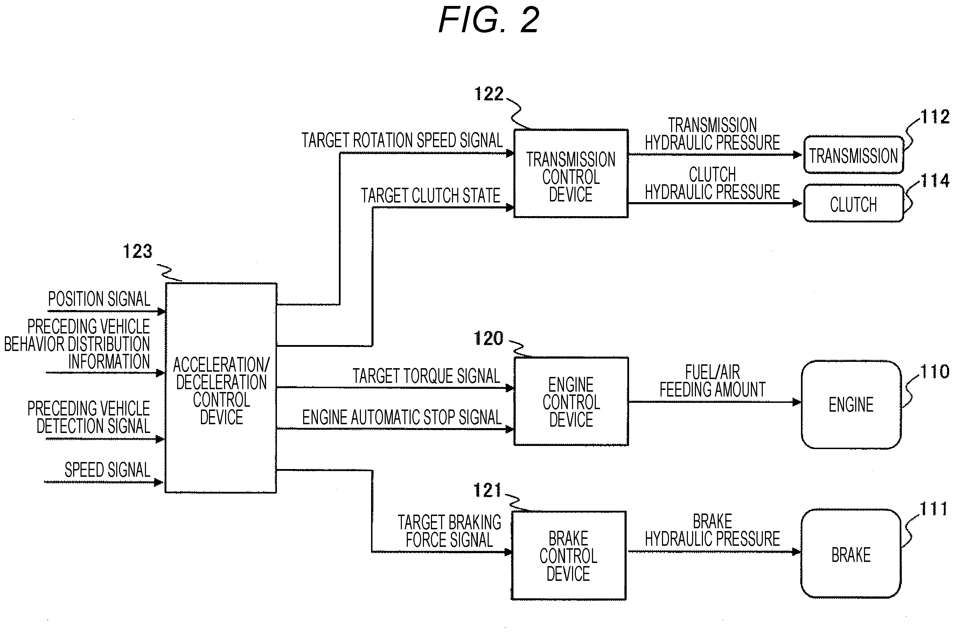

FIG. 2 is a block diagram illustrating a configuration of the vehicle control device according to the first embodiment.

The vehicle control device is provided with the acceleration/deceleration control device 123, the engine control device 120, the brake control device 121, the transmission control device 122, the engine 110, the brake 111, the transmission 112, and the clutch 114.

In the following, a flow of calculation of the control device in the first embodiment will be described using FIG. 2.

The acceleration/deceleration control device 123 calculates a target torque signal which is a target value of torque generated by the engine 110, an engine automatic stop signal to stop the engine, a target rotation speed signal which is a target value of the rotation speed of the engine 110, a target clutch state which is a target state (a disconnection state or a connection state) of the clutch 114, and a target braking force signal which is a target value of the braking force generated by the brake 111 on the basis of a preceding vehicle detection signal output by the front recognition sensor 130, a vehicle speed signal output by the speed sensor 131, a position signal output by the GPS sensor 132, and statistics information obtained through the communication device 140 and the telematics device 124. With this configuration, the acceleration/deceleration of the vehicle can be controlled, the clutch can be controlled into the disconnection state, and the engine can be stopped.

The engine control device 120 calculates a fuel/air feeding amount signal to control a feed amount of fuel/air to the engine 110 on the basis of the target torque signal output by the acceleration/deceleration control device 123. With this configuration, it is possible to control the torque generated by the engine 110. In addition, the engine 110 can be stopped at an appropriate sequence by the engine automatic stop signal. For example, the sequence may be set such that the ignition is stopped after the fuel supply is stopped, the throttle valve is closed by minimizing a target air amount to stop generating the drive force of the engine, and the engine is stopped by its own rotational resistance.

The transmission control device 122 calculates a transmission hydraulic signal to control the hydraulic pressure supplied to the transmission 112 and a clutch hydraulic signal to control the hydraulic pressure supplied to the clutch 114 on the basis of the target rotation speed signal output by the acceleration/deceleration control device 123 and the target clutch state. With this configuration, the transmission ratio of the transmission 112 (that is, the rotation speed of the engine 110) and the power transferring state of the clutch 114 can be controlled. The brake control device 121 calculates a brake hydraulic pressure signal to control the hydraulic pressure supplied to the brake 111 on the basis of the target braking force signal output by the acceleration/deceleration control device 123. With this configuration, it is possible to control the braking force generated by the brake 111.

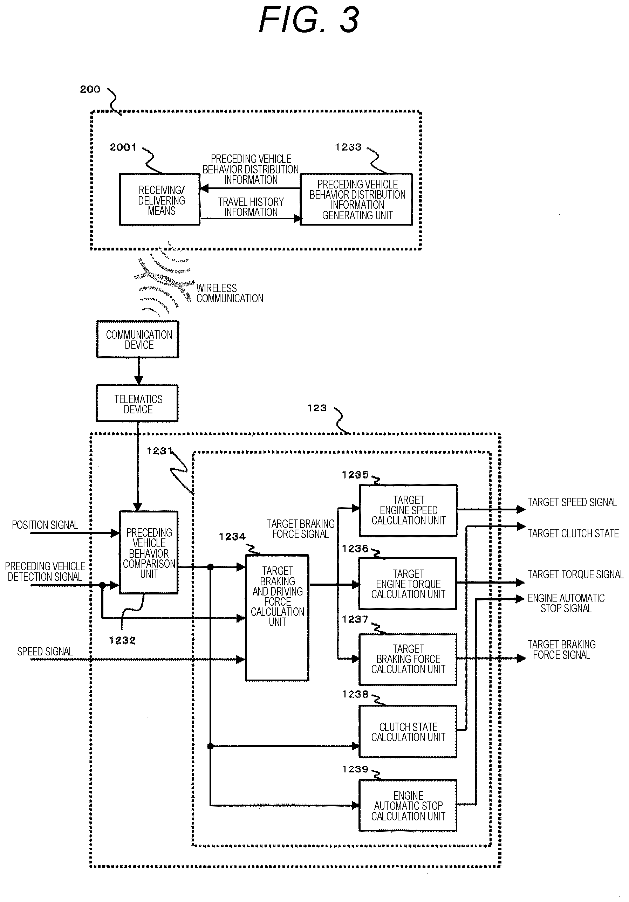

FIG. 3 is a block diagram illustrating a configuration of the acceleration/deceleration control device 123 in the first embodiment.

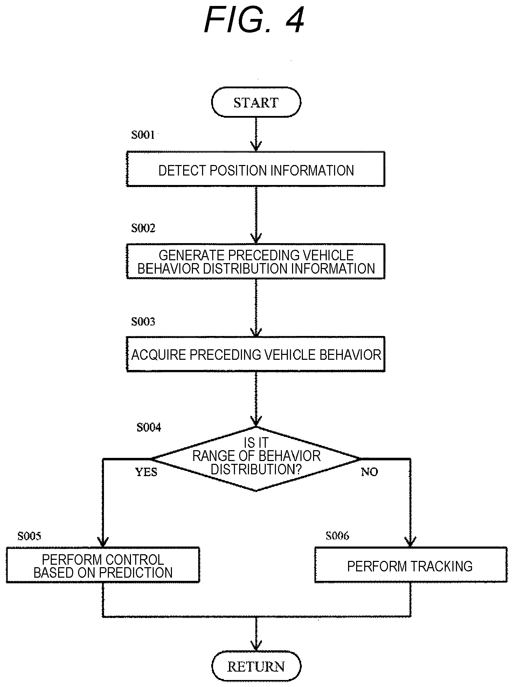

FIG. 4 is a flowchart illustrating an operation of the acceleration/deceleration control device 123 in the first embodiment.

In the following, a travel controlling operation of the first embodiment will be described using FIGS. 3 and 4.

The acceleration/deceleration control device 123 includes a control unit 1231 and a preceding vehicle behavior comparison unit 1232. The data center 200 is configured by an information receiving/delivering means 2001 and a preceding vehicle behavior distribution information generating unit 1233. Further, the control unit 1231 includes a target driving force calculation unit 1234, a target engine speed calculation unit 1235, a target engine torque calculation unit 1236, a target braking force calculation unit 1237, a clutch state calculation unit 1238, and an engine automatic stop calculation unit 1239.

The preceding vehicle behavior distribution information generating unit 1233 generates a preceding vehicle behavior distribution with respect to a position on the basis of the statistics information and the position information. A preceding vehicle behavior is a vehicle speed is acquired from the preceding vehicle for example, and the details thereof will be described below. The preceding vehicle behavior comparison unit 1232 compares a preceding vehicle speed distribution generated by the preceding vehicle behavior distribution information generating unit 1233 and the preceding vehicle detection signal. In this case, the preceding vehicle detection signal becomes a preceding vehicle speed.

The target driving force calculation unit 1234 generates a target braking and driving force signal on the basis of the calculation result of the preceding vehicle behavior comparison unit 1232, the preceding vehicle detection signal, and the speed sensor 131. In addition, the clutch state calculation unit 1238 calculates the target clutch state on the basis of the calculation result of the preceding vehicle behavior comparison unit 1232. Further, the engine automatic stop calculation unit determines whether the engine is stopped on the basis of the calculation result of the preceding vehicle behavior comparison unit 1232.

The operations of units will be described.

In Step S001 of FIG. 4, the position information is detected by the GPS sensor 132. In Step S002, preceding vehicle behavior distribution information is generated on the basis of the detected position information and the acquired statistics information. This operation is performed by the preceding vehicle behavior distribution information generating unit 1233. Next, in Step S003, the preceding vehicle behavior is acquired from the front recognition sensor 130. In Step S004, the acquisition results of the preceding vehicle behavior distribution information and the preceding vehicle behavior are compared. This configuration is performed by the preceding vehicle behavior comparison unit 1232.

In a case where it is determined in Step S004 that the preceding vehicle behavior follows the distribution, the control based on a predicted preceding vehicle behavior is performed in Step S005. If not, the control of tracking the preceding vehicle is performed in Step S006. This operation is performed by the control unit 1231. The above routine is repeatedly performed in a period during which an ignition key (not illustrated) of the vehicle 100 is in an on state.

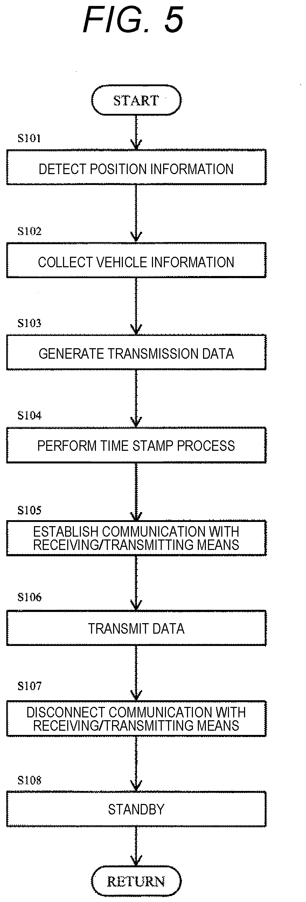

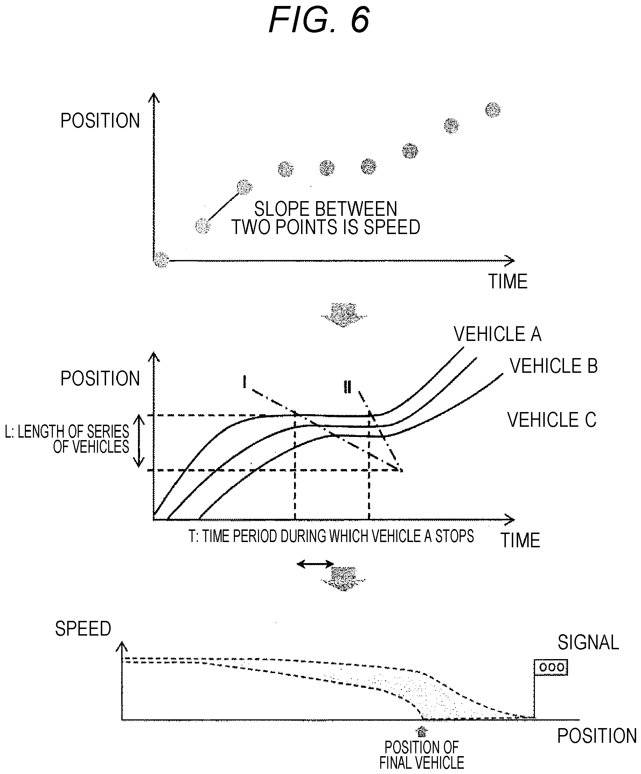

FIGS. 5 and 6 are diagrams for describing a generation method of the preceding vehicle behavior distribution information which is performed by the preceding vehicle behavior distribution information generating unit in the data center 200.

FIG. 5 is a generation flow of a travel history performed in the telematics device 124 of the vehicle 100.

In Step S101 of FIG. 5, the position information is acquired through the GPS sensor 132 of the vehicle 100. In Step S102, information such as speed information of the vehicle, a steering angle, and the target braking and driving force is collected. In Step S103, these pieces of information are combined to generate transmission data.

In Step S104, a time stamp process based on time information is performed. In Step S105, the communication with the data center 200 is established. In Step S106, data is transmitted to the data center 200. In Step S107, the communication with the data center 200 is disconnected. In Step S108, a predetermined standby process is performed, and then the routine is repeatedly performed. In the standby process in Step S108, the operation may be on standby until a predetermined time elapses, or may be on standby until the vehicle moves a predetermined distance on the basis of a detection result of the GPS sensor 132. In addition, the procedure of Steps S105 to S107 may be performed at every routine, or may be performed once at the number of times of the routine.

In this case, the data subjected to the time stamp process in Step S104 may be transmitted after being accumulated and collected over a predetermined number of times of the routine, the information may be held until the communication environment becomes a suitable state for example, or the data may be transmitted at timing when the operation of the vehicle 100 is ended. For example, in a case where the data is collected and transmitted once in the number of times or at the end timing, power consumption and communication cost may be saved. On the other hand, if the procedure is performed at every routine, these pieces of information are transmitted from the other vehicles similarly. Therefore, it is possible to generate the preceding vehicle behavior distribution information in a short time period (that is, without delay of information).

FIG. 6 is a diagram for describing a generation method of vehicle behavior distribution information which is performed in the data center 200 after a process of collecting the travel history information of the plurality of vehicles including a host vehicle through a wireless communication with the communication device 140 of each vehicle illustrated in the flow of FIG. 5 through the information receiving/delivering means 2001.

In the upper portion of FIG. 6, the speed is obtained from the position information received together with the time stamp information. In the upper portion of FIG. 6, a moving distance from the position information is calculated, and an elapse time is calculated from the time stamp information, so that the speed is obtained. In other words, the slope between two points becomes the speed of the vehicle.

In the middle portion of FIG. 6, point group information thus obtained is complemented, and a speed behavior with respect to the position is generated. The complementing method may be a linear complementing between two points, or a moving average of a plurality of points. The obtained speed may be calculated for each vehicle, and an existing position where a series of vehicles stopped toward a signal illustrated in the lower portion of FIG. 6, a position of the final vehicle, and an average speed of the vehicles in the section where a series of vehicles exist may be calculated. For example, an intersection between broken lines I and II from the position of the vehicle (the stop position of the vehicle A) which stops first in the middle portion of FIG. 6 may be set as a length of the series of vehicles. A chain line I shows a procedure of the head position of the vehicle stopped at a signal is propagated backward with respect to a time axis. On the other hand, a chain line II shows a procedure of the head position of the vehicle which is progressing sequentially is propagated backward.

Therefore, the range formed by intersections between the chain lines has been described as a certain range where a series of vehicles are likely to exist. If the range is assumed as a length of the series of vehicles, it is possible to extract feature information of a series of vehicles at a point from the position information (signals, etc.) at a static stop line existing on at least a map and the length of the series of vehicles obtained by the statistics of travel history of the vehicle.

With this configuration, it is possible to generate a vehicle speed distribution of a general vehicle at a point such as a signal, a tunnel, a curve, and a sag part where the vehicle traveling a road changes the speed (regardless of awareness).

On the basis of the travel history of the plurality of vehicles, it is possible to statistically obtain the history of changing the speed of the vehicle traveling at the point for some reason which is a traffic factor on a road where an intersection, a tunnel, and a gradient are changed. In general, the driver is a person, and a personality is reflected on the driving of the vehicle. Further, even if an autopilot is mounted in the vehicle, the driving operation of the vehicle with respect to a travel environment differs depending on a manufacturer. Therefore, a general behavior is hardly reflected only by the travel history of a single vehicle. Statistics data based on more samples is appropriate to extract how speed change is made for a certain reason. Based on such statistics, a vehicle behavior distribution including an appropriate amount of information as a typical vehicle speed distribution at the point can be obtained.

Next, an operation performed by the preceding vehicle behavior comparison unit 1232 will be described. In the preceding vehicle behavior comparison unit 1232, the preceding vehicle behavior distribution information described above is compared with the preceding vehicle behavior based on the preceding vehicle detection signal. The comparison includes a process of predicting the preceding vehicle behavior at a near future time based on the obtained preceding vehicle detection signal. The vehicle traveling on a road travels according to recognition, determination, and operations of the driver or the autopilot which operates the vehicle. The driver or the autopilot travels in consideration of the front side specifically as long as the vehicle advances forward while considering an ambient environment. Therefore, the situation is predicted on the basis of a stochastic model, and the preceding vehicle behavior is appropriately generated.

In the embodiment of the invention, the behavior of the vehicle is expressed as a stochastic model in which the vehicle transitions states such as acceleration, normal traveling, and deceleration. The Bayes theorem is used for the stochastic model. The Bayes theorem is expressed as Equation (1).

[Math. 1]

$$\text{Equation (1)}$$

$$P(B_i|A) = \frac{P(A|B_i)P(B_i)}{\sum_n P(A|B_n)\,P(B_n)}$$

A probability of any event, that is, the acceleration of the preceding vehicle, the traveling without changing speed, or the deceleration is obtained. In Equation (1), $P(B_i)$ represents a probability that $B_i$ is generated, and $P(A|B_i)$ represents a likelihood that A is generated. Further, $P(B_i|A)$ represents a probability that $B_i$ is generated as a result of generating A. As for the likelihood, Equations (2) and (3) are defined by a vector S of an average value V as a covariance matrix and a vector Z obtained by a preceding vehicle detection signal on the assumption of a Gaussian distribution of expectation values.

[Math. 2]

$$\text{Equation (2)}$$

$$V = (V_1, V_2, \cdots, V_i), \qquad S = \begin{pmatrix} \sigma_{11} & \cdots & \sigma_{1n} \\ \vdots & \ddots & \vdots \\ \sigma_{n1} & \cdots & \sigma_{nn} \end{pmatrix}, \qquad Z = \begin{pmatrix} Z_1 \\ Z_2 \\ \vdots \\ Z_n \end{pmatrix}$$

[Math. 3]

$$\text{Equation (3)}$$

$$P(A|B_i) = \frac{1}{\left(\sqrt{2\pi}\right)^m \sqrt{|S|}} e^{-\frac{1}{2}(Z-V)^T \Sigma (Z-V)}$$

According to the Bayes estimation, an occurrence probability of the following travel state can be calculated from the current travel state on the basis of preceding vehicle detection information obtained through the front recognition sensor 130. In Equation (2), V and Z are generated on the basis of the preceding vehicle behavior distribution information. In Equation (1), the acceleration of the preceding vehicle is put in the posterior probability $P(B_i|A)$, and the behavior of the preceding vehicle at the following timing is estimated, so that the behavior of the preceding vehicle is predicted.

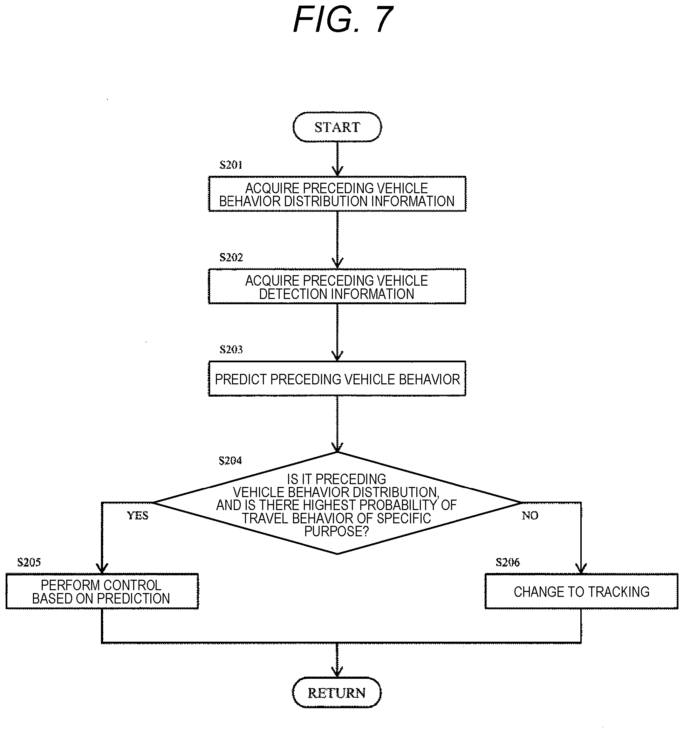

A flow performed in the comparison unit is illustrated in FIG. 7.

In Step S201, the preceding vehicle behavior distribution information is acquired. In Step S202, actual preceding vehicle behavior information is acquired through the front recognition sensor 130. In Step S203, the following operation of the preceding vehicle is predicted on the basis of the information obtained in Steps S201 and S202.

In Step S204, in a case where the prediction result falls within the preceding vehicle behavior distribution, and there is a high probability of a specific purpose (for example, a travel behavior for stopping), it is determined that the purpose of the speed change of the preceding vehicle is to stop the vehicle. The host vehicle stops the control of keeping the inter-vehicle distance and travels by inertia. With this configuration, it is possible to provide an economical traveling control without consuming fuel for the acceleration.

In other words, in the vehicle control device disclosed in claim 1 of the invention, a vehicle behavior distribution information generating unit which generates the preceding vehicle behavior distribution information at a given location on a road on the basis of the travel history of the plurality of vehicles is the preceding vehicle behavior distribution information generating unit 1233, a preceding vehicle actual behavior detection unit which detects actual behavior information of the preceding vehicle immediately ahead is the front recognition sensor 130, the comparison unit which compares the vehicle behavior distribution information and the actual behavior information of the preceding vehicle is the preceding vehicle behavior comparison unit 1232, and a control unit which controls the host vehicle on the basis of a result of comparison of the comparison unit is the comparison unit 1231.

Therefore, in the first embodiment of the invention, as disclosed in the invention according to claim 1, the vehicle is controlled by the vehicle behavior distribution information generating unit which generates the preceding vehicle behavior distribution information at a given location on the road on the basis of the travel history of the plurality of vehicles, the preceding vehicle actual behavior detection unit which detects the actual behavior information of the preceding vehicle immediately ahead, the comparison unit which compares the vehicle behavior distribution information with the actual behavior information of the preceding vehicle, and the control unit which controls the host vehicle on the basis of the result of comparison of the comparison unit. Therefore, the preceding vehicle can determine that the vehicle is decelerated to stop, and the host vehicle can stop the control of keeping the inter-vehicle distance to travel by inertia. With this configuration, it is possible to provide an economical traveling control without consuming fuel for the acceleration.

Second Embodiment

A second embodiment of the invention is different from the configuration of the first embodiment in that an engine drive force is controlled to the disconnection state in a case where the preceding vehicle actual behavior follows the preceding vehicle behavior distribution information on the basis of the result of comparison of the comparison unit.

In other words, the second embodiment of the invention corresponds to the invention of claim 2. In other words, in the vehicle control device according to claim 1, the control unit which controls the host vehicle includes a process of controlling the engine drive force in the disconnection state in a case where the preceding vehicle actual behavior follows the preceding vehicle behavior distribution information on the basis of the result of comparison of the comparison unit.

In general, the vehicle is not possible to track the preceding vehicle only by the tracking control to keep the inter-vehicle distance to the preceding vehicle. Since there is a need to adjusting the engine drive force, it is difficult to separate the drive source. According to the invention disclosed in claim 2, for example, the preceding vehicle follows the preceding vehicle behavior distribution, and switches the state of traveling to keep the inter-vehicle distance to a state where the host vehicle travels by inertia as long as there is no large increase in speed. Therefore, the vehicle can travel with a low fuel consumption. The fuel consumption of the vehicle can be increased, and an economical traveling control can be provided.

In FIG. 3, on the basis of the calculation result of the preceding vehicle behavior comparison unit 1232, in a case where a continuous stopping is predicted over 1 second as a result of calculation of the preceding vehicle behavior comparison unit 1232, a clutch state determination unit transmits a command to the transmission control device 122 to set the clutch to the disconnection state. With this configuration, the transmission control device 122 controls a clutch hydraulic pressure to change the clutch 114 to the disconnection state.

Compared to the first embodiment, the braking operation caused by friction of the engine 110 (so-called engine brake) does not occur. Therefore, the deceleration of the vehicle speed is reduced, and the inertia travel can be kept for a long time. According to the second embodiment of the invention, the preceding vehicle follows the preceding vehicle behavior distribution, and switches the state of traveling to keep the inter-vehicle distance to a state where the host vehicle travels by inertia as long as there is no large increase in speed. Therefore, the vehicle can travel with a low fuel consumption. The fuel consumption of the vehicle can be increased, and an economical traveling control can be provided.

Third Embodiment

A third embodiment of the invention corresponds to the invention of claim 3. In other words, in the vehicle control device according to claim 2, the control unit which controls the host vehicle further includes a process of stopping the engine in a case where the preceding vehicle actual behavior continues to follow the preceding vehicle behavior distribution information on the basis of the result of comparison of the comparison unit.

The third embodiment of the invention is different from the second embodiment in that the control unit which controls the host vehicle further includes a process of stopping the engine in a case where the preceding vehicle actual behavior continues to follow the preceding vehicle behavior distribution information on the basis of the result of comparison of the comparison unit. Compared to the second embodiment, the engine 110 is stopped to travel the vehicle 100 by inertia without fuel consumption.

According to the third embodiment of the invention, similarly to the invention of claim 2, for example, the preceding vehicle follows the preceding vehicle behavior distribution, and switches the state of traveling to keep the inter-vehicle distance to a state where the host vehicle travels by inertia as long as there is no large increase in speed. The fuel supply to the engine is stopped, and the vehicle travels without consuming fuel at all by setting the engine to the stop state. Further, it is possible to provide an economical traveling control.

However, the fuel injection amount is generally increased in order to reactivate the engine 110. Therefore, there is a concern that the fuel consumption is increased when the engine is stopped in a very short period of time. In order to relieve this concern, for example, in a case where there is a need to stop the engine 110 for more than 5 seconds and the vehicle is at least decelerated over 5 seconds in the future as the comparison result of the preceding vehicle behavior comparison unit 1232 because the preceding vehicle is stopping, the engine automatic stop calculation unit 1239 transmits an engine automatic stop command to the engine control device 120 on the basis of the result of comparison of the preceding vehicle behavior comparison unit 1232. With this configuration, the preceding vehicle follows the preceding vehicle behavior distribution, and switches the state of traveling to keep the inter-vehicle distance to a state where the host vehicle travels by inertia as long as there is no large increase in speed. The fuel supply to the engine is stopped, and the vehicle travels without consuming fuel at all by setting the engine to the stop state. Further, it is possible to provide an economical traveling control.

Fourth Embodiment

A fourth embodiment of the invention corresponds to the invention of claim 4. In other words, in the vehicle control device according to claim 1, the control unit which controls the host vehicle corrects a drive force gain at the time of tracking control in a case where the preceding vehicle actual behavior follows the preceding vehicle behavior distribution information on the basis of the result of comparison of the comparison unit.

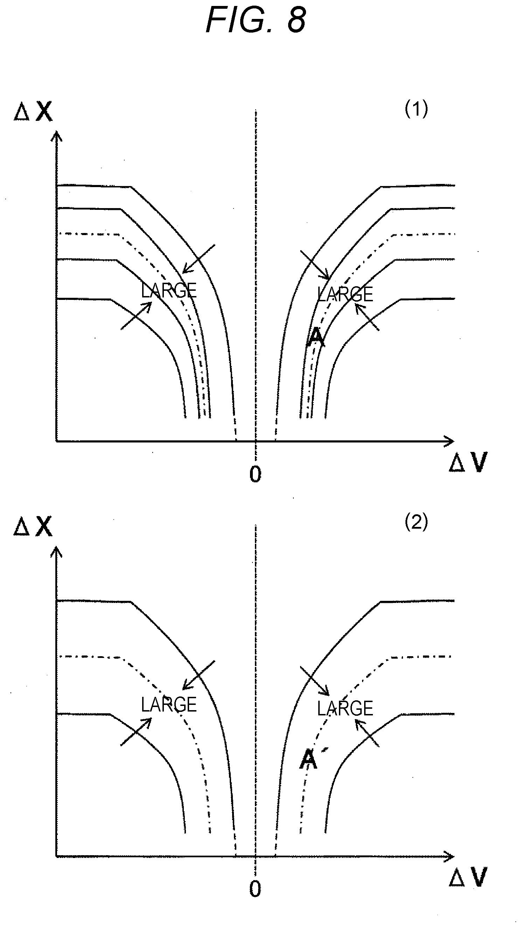

In other words, the embodiment is different from the first embodiment in that a target drive force calculation method is changed in the target braking and driving force calculation unit 1234. FIG. 8 is a diagram which is generated to keep a desired inter-vehicle distance, illustrating the target braking and driving force calculated in the target driving force calculation unit 1234 in a two-dimensional manner with the inter-vehicle distance and a relative speed with respect to the preceding vehicle.

The horizontal axis of FIG. 8 represents the relative speed with respect to the preceding vehicle, and the vertical axis of the drawing represents the inter-vehicle distance. For example, the target braking and driving force can be set using contours to display a maximum combination of the relative speed and the inter-vehicle distance. (1) and (2) of the drawing each illustrate a change of the target braking and driving force which changes depending on a magnitude of an acceleration/deceleration gain. In the diagram of (2), the acceleration/deceleration gain is set small with respect to the diagram of (1). In other words, the target drive force of A in the drawing of the combination of the vehicle speed and the inter-vehicle distance and the target drive force of A' in the drawing are generated to satisfy the relation of A > A'.

With this configuration, in a case where the traveling toward a signal congestion is predicted by comparing the preceding vehicle behavior distribution information and the actual preceding vehicle behavior, it is possible to provide an economical traveling control in which the target braking and driving force of (2) of the drawing is set until the vehicle passes through the signal so as to suppress an extra acceleration/deceleration.

According to the fourth embodiment of the invention, for example, in a case where the traveling toward the signal congestion is predicted by comparing the preceding vehicle behavior distribution information and the actual preceding vehicle behavior, the vehicle does not need a large acceleration until passing through the signal. In a case where the vehicle is operated by a driver, the driver does not excessively press the accelerator to accelerate the vehicle (that is, the driver repeatedly presses and releases the brake to speed down the vehicle). Therefore, the fuel consumption is increased, and it is difficult to provide an economical traveling control. Even in a case where the braking and driving force is automatically controlled to track the preceding vehicle, a large acceleration is not required. Therefore, an extra acceleration (that is, an extra fuel consumption) can be suppressed by reducing the drive force gain, and the economical traveling control can be provided.

Fifth Embodiment

A fifth embodiment of the invention corresponds to the invention of claim 5. In other words, in the vehicle control device according to claim 1, the control unit which controls the host vehicle changes a control theory (control target) to keep the speed while continuing the tracking control in a case where the preceding vehicle actual behavior follows the preceding vehicle behavior distribution information on the basis of the result of comparison of the comparison unit.

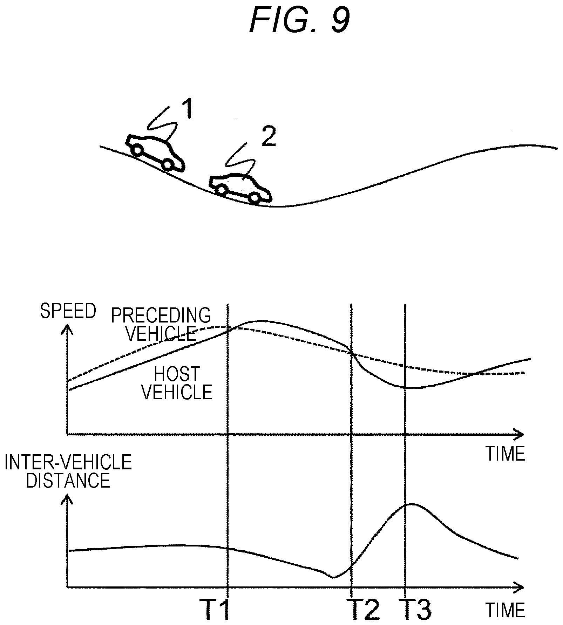

The effect of this embodiment will be described using an example of a road shape called a sag where an ascending gradient appears after a descending gradient with reference to FIG. 9. In a case where the vehicle travels on a road of a sag part, and a host vehicle 1 travels while keeping a distance to a preceding vehicle 2, the speed is increased in the descending gradient portion, and thus the host vehicle is more likely to decrease the speed in accordance with the preceding vehicle which decreases the speed in the ascending gradient due to the gradient.

In other words, the preceding vehicle 2 approaches the ascending gradient while the host vehicle 1 travels in the descending gradient again at time T1, and thus the speed is lowered. Therefore, after time T1, the inter-vehicle distance is reduced earlier, and the host vehicle 1 needs to reduce the speed at time T2. In order to shorten the increased the inter-vehicle distance at time T3, the vehicle needs to travel the ascending gradient at a high speed compared to the preceding vehicle 2. As a result, the speed change becomes large compared to the preceding vehicle 2. Therefore, the fuel consumption is increased.

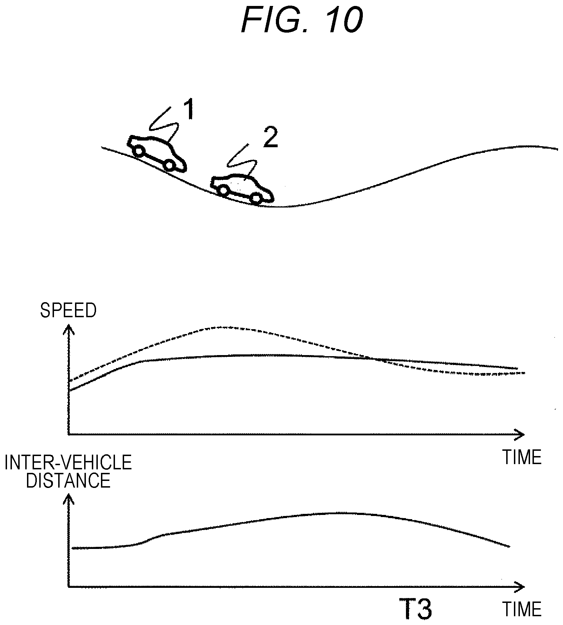

In a case where the behavior of the preceding vehicle is predicted by the preceding vehicle behavior distribution and the actual preceding vehicle behavior information, the traveling control is changed to travel to keep the speed as illustrated in FIG. 10 rather than to travel to keep the inter-vehicle distance. With this configuration, the inter-vehicle distance is expanded in the descending gradient portion, and is shortened as the speed of the preceding vehicle is reduced in the ascending gradient portion. The speed change of the host vehicle is less compared to a case where the inter-vehicle distance is kept. The fuel consumption is suppressed, so that it is possible to provide an economical traveling control.

Sixth Embodiment

A sixth embodiment of the invention corresponds to the invention of claim 6. In other words, in the vehicle control device according to claim 1, the control unit which controls the host vehicle resets a target power generating voltage of an in-vehicle generator to a high voltage in a case where the preceding vehicle actual behavior follows the preceding vehicle behavior distribution information on the basis of the result of comparison of the comparison unit, and in a case where the inter-vehicle distance or an inter-vehicle time to the preceding vehicle is less than a predetermined value, or the relative speed is equal to or more than a predetermined value.

According to the sixth embodiment of the invention, it is predicted that the preceding vehicle is stopping as a result of comparing the preceding vehicle behavior distribution information and the actual preceding vehicle behavior information. On the other hand, in a case where the inter-vehicle distance to the preceding vehicle, the inter-vehicle time, or the relative speed is equal to or more than a predetermined value by the front recognition sensor 130, the decelerating is more likely to be made using the brake 111 in order to more reduce the speed of the host vehicle.

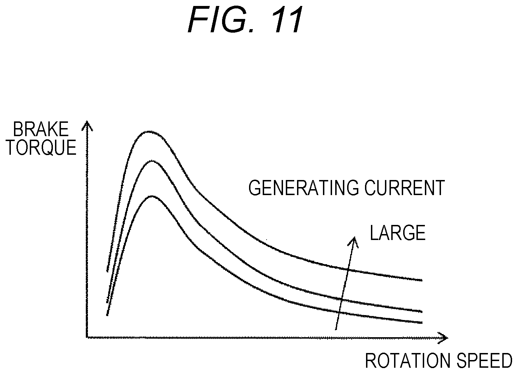

FIG. 11 illustrates an example of a performance characteristic of a generator 116 in FIG. 1. In general, the power source mounted in the vehicle 100 is a secondary battery, and is charged with a predetermined rated voltage. Therefore, the generating current is increased by setting the target power generating voltage of the generator 116 to a high voltage, and as a result a brake torque is increased. Since the generator 116 is attached to the output shaft of the engine 110, the braking force for the engine 110 is increased if the target power generating voltage is increased. Further, the braking force can be operated as the braking force for the vehicle 100. In this way, it is possible to provide an economical traveling control more effectively by increasing the target power generating voltage of the generator and regenerating the kinetic energy as the electric energy rather than converting the kinetic energy into the thermal energy using the friction brake.

Seventh Embodiment

A seventh embodiment of the invention corresponds to the invention of claim 7. In the vehicle control device according to claims 1 to 6, a lateral vehicle detection unit is provided in a control target vehicle. The control unit keeps tracking the preceding vehicle in a case where the preceding vehicle actual behavior continues to follow the preceding vehicle behavior distribution information, and the speed of the vehicle traveling on the lateral side and the relative speed of the host vehicle are equal to or more than a predetermined value on the basis of a detection result of the lateral vehicle detection unit and the vehicle traveling on the lateral side is at a higher speed.

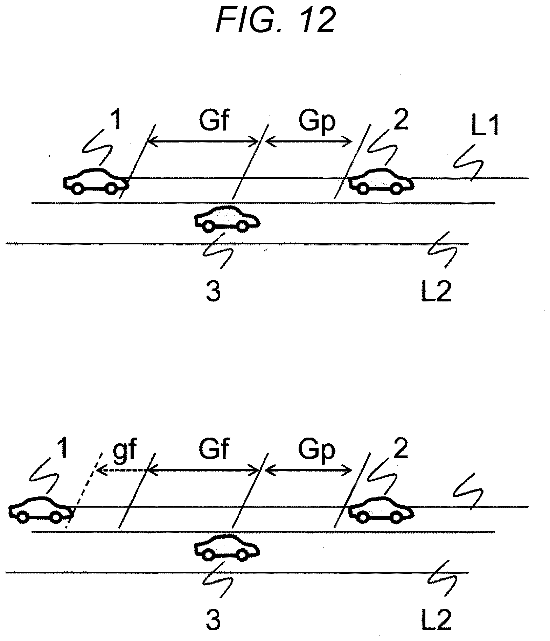

In FIG. 1, the vehicle 100 includes a lateral recognition sensor 134 and detects the speed information of the vehicle traveling on the lateral side of the vehicle 100. In the upper portion of FIG. 12, a lateral vehicle 3 traveling on a travel lane L2 different from the host vehicle 1 may change the lane to the travel lane L1 where the host vehicle 1 on the basis of the inter-vehicle distances Gp and Gf and the inter-vehicle time of the vehicle (that is, the preceding vehicle 2 traveling on a travel lane L1 of the host vehicle 1) to precede after lane change and the following vehicle (in this case, the host vehicle 1).

In the control device of the vehicle according to claims 1 to 6, an inter-vehicle distance gf may be added to the inter-vehicle distance Gf so far as illustrated in the lower portion of FIG. 12 in order to change the control state from the keeping the distance to the preceding vehicle to the inertia traveling. In this case, if the vehicle changes the lane from the lateral side, the vehicle is necessarily braked right away or turns the handle. Therefore, there is a concern that the traveling performance is degraded and the stability is lowered.

According to the seventh embodiment of the invention, that is, the invention according to claim 7, in a case where the speed of the vehicle traveling on the lateral side and the relative speed of the host vehicle are equal to or more than a predetermined value, and the vehicle traveling the lateral side is at a higher speed, the tracking to the preceding vehicle continues while keeping the inter-vehicle distance, so that the vehicle traveling on the lateral side can pass away the host vehicle, and the lane change to the front side of the host vehicle is less likely. As a result, it is possible to prevent that the vehicle is controlled to degrade the traveling performance.

Eighth Embodiment

An eighth embodiment of the invention corresponds to the invention of claim 8. The vehicle control device according to claims 1 to 7 is provided with a rear recognition sensor 134 as a following vehicle detection unit in the control target vehicle in FIG. 1. In a case where any one of the inter-vehicle time, the relative speed, and the inter-vehicle distance to the following vehicle is less than a predetermined value on the basis of the detection result of the following vehicle detection unit, the control unit continues the preceding vehicle tracking control.

If a vehicle density is such that the host vehicle recognizes the preceding vehicle and travels, it is normal to assume that there is a vehicle on the rear side of the host vehicle. In a case where the control of the invention according to claims 1 to 7 is performed, the host vehicle is changed from the control of keeping the inter-vehicle distance to the preceding vehicle to the control of the inertia traveling or is decelerated at an acceleration larger than a normal engine brake.

At this time, in a case where the inter-vehicle distance and the inter-vehicle time to the following vehicle are short, and in a case where the following vehicle is approaching at a speed larger than the host vehicle, there may be a possibility of collision and the increase of the psychological burden of the driver of the following vehicle if the control state of the host vehicle is an unpredictable behavior for the driver of the following vehicle. Therefore, the vehicle control device according to claim 8 further includes the following vehicle detection unit. In a case where the inter-vehicle time, the relative speed, and the inter-vehicle distance to the following vehicle is less than a predetermined value, the preceding vehicle tracking control continues. With this configuration, the host vehicle (the preceding vehicle for the following vehicle) travels without a change in normal behavior from the viewpoint of the vehicle traveling on the rear side of the host vehicle. Therefore, it is possible to provide the traveling control of the host vehicle without causing collision and the increase of the psychological burden of the driver of the following vehicle.

As such a predetermined value, if the inter-vehicle time is less than 2 seconds, the preceding vehicle tracking control may be set to continue. The inter-vehicle time of 2 seconds is an average inter-vehicle time in a case where a human driver operates the vehicle. If the inter-vehicle time is short, the vehicles approach nearer, and if long, the vehicles are separated.

Ninth Embodiment

A ninth embodiment of the invention corresponds to the invention of claim 9. In the vehicle control device according to claim 8, the control unit corrects the predetermined value to be reduced in a case where the following vehicle is operated in the autopilot.

The operation of the autopilot mode performs the traveling control on the basis of a relation between the preceding vehicle (that is, the host vehicle) for the following vehicle and the following vehicle operated in the autopilot mode. Unlike the case of the human driver, the vehicle does not travel while narrowing the distance to the host vehicle. Therefore, even when the traveling control according to the invention of claims 1 to 7 is performed, the traveling control has a margin for coping with that situation. In other words, in a case where the vehicle operated by a human driver becomes a following vehicle with respect to the host vehicle, the allowance becomes larger. As described in the invention of claim 9, a predetermined value of any one of the inter-vehicle time, the relative speed, and the inter-vehicle distance to the following vehicle is corrected. Therefore, it is possible to expand a chance to perform the traveling control according to the invention of claim 1 to 7.

For example, it may be considered a method of setting a predetermined value such that the control of keeping the inter-vehicle distance to the preceding vehicle until the inter-vehicle time becomes less than 1.5 or 1 second is switched to a state where the traveling is kept while disconnecting the clutch.

Tenth Embodiment

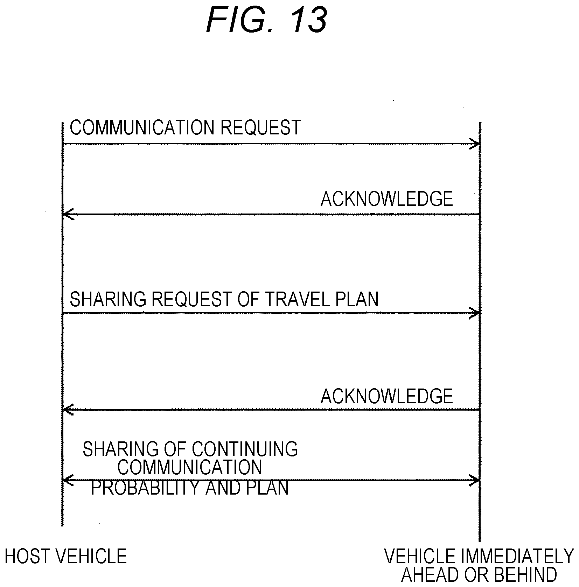

A tenth embodiment of the invention corresponds to the invention of claim 10. In the vehicle control device according to claims 1 to 3, an inter-vehicle communication unit is provided in the control target vehicle. The control unit further includes a process of generating a sharing request for a travel plan in a case where the communication with the preceding vehicle immediately ahead is able to be established by the inter-vehicle communication unit. For example, as illustrated in FIG. 13, in a case where the vehicle immediately ahead responds to an update request of the host vehicle, the sharing request for the travel plan is transmitted.

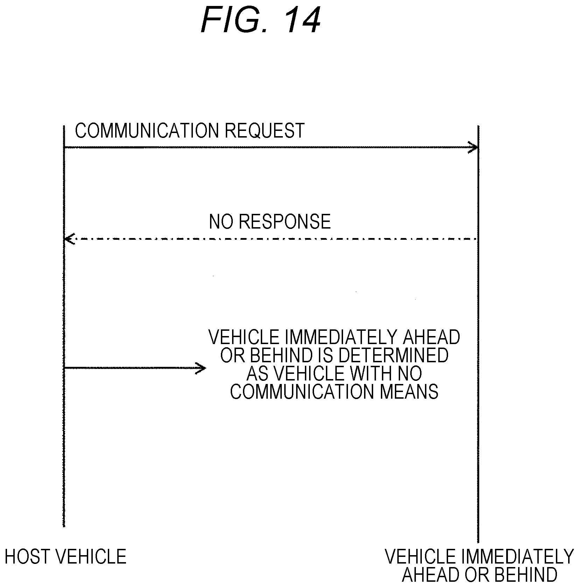

On the other hand, as illustrate in FIG. 14, in a case where there is no respond to the request, or in a case where the request is refused, the vehicle immediately ahead is recognized as a vehicle with no communication unit mounted.

As described together with the effects of the invention of claims 7 to 9, a relation between the host vehicle and the ambient vehicles of the host vehicle is important in order to perform the invention of claims 1 to 3. According to the vehicle control device of claim 10, the inter-vehicle communication unit is provided in the control target vehicle. The control unit further includes a process of transmitting the sharing request for the travel plan in a case where the communication with the preceding vehicle immediately ahead is able to be established by the inter-vehicle communication unit. With this configuration, the host vehicle can obtain the travel plan of a vehicle traveling ahead to grasp the behavior of the preceding vehicle with more accuracy according to the invention of claims 1 to 3. For example, the power transmission can be disconnected and also the engine can be stopped earlier, so that the fuel consumption can be lowered, and the economical traveling control can be provided.

Eleventh Embodiment

An eleventh embodiment of the invention corresponds to the invention of claim 11. In the vehicle control device according to claim 10, the control unit further includes a process of transmitting the sharing request for the travel plan in a case where the communication with the vehicle traveling behind the host vehicle is able to be established by the inter-vehicle communication unit.

Similarly to the invention of claim 10, if the travel plan of the host vehicle is able to be shared with the following vehicle, the consideration on the following vehicle described in the invention of claim 8 can be more performed in more detail.

In other words, according to the vehicle control device of claim 11, the following vehicle can perform control in accordance with the travel plan of the host vehicle with the process of sharing the travel plan of the host vehicle with the following vehicle. Therefore, it is possible to provide the traveling control without causing the degradation in traveling of the following vehicle and the psychological burden of crew members.

Twelfth Embodiment

A twelfth embodiment of the invention corresponds to the invention of claim 12. In the vehicle control device according to claims 1 to 11, the control unit further includes a process of acquiring update history information of the preceding vehicle behavior distribution information. In a case where a predetermined period or more has elapsed since the latest update has been performed, the preceding vehicle tracking control continues.

Traffic conditions on a road are normally changed depending on weather, time zones, days of the weak, and event held nearby. However, in a case where a predetermined period or more has elapsed since the preceding vehicle behavior distribution information could be acquired, it should be considered that there is a gap between the information and an actual preceding vehicle behavior distribution in high possibility. For example, in a case where a certain road is wide and used for commuting, and traffic volume changes between morning and evening times when many vehicles for commuting are traveling and daytime times when fewer vehicles have such purposes, the preceding vehicle behavior distribution characteristic is different.

In a case where the preceding vehicle behavior distribution information generated in the morning or evening time zone is used when the host vehicle passes through that point during the day time, the deviation from the actual preceding vehicle behavior information is high, and there is a possibility that the expected traveling control may be not executed.

In such a case, the control of tacking the preceding vehicle may be performed. In such a time period, a standard for determining obsolescence of information may be set in a period of 15 minutes to 3 hours. In addition, the standard for determining obsolescence may be changed from days of the weak or the point. It is considered that there are few samples for generating preceding vehicle behavior distribution information in suburbs where traffic volume is usually small. Therefore, there is a possibility that information having uniform generality is not likely to be generated at any time zone. In such a case, it is considered that there is no problem even if general data is preferentially used as information representing one day or one week.

In other words, according to the invention of claim 12, through the process of acquiring update history information of the preceding vehicle behavior distribution information, it is possible to determine whether a predetermined period or more has elapsed since the latest updated information has been performed. In a case where, the information is old, the preceding vehicle tracking control continues. With this configuration, it is possible to avoid that an expected traveling control is not performed.

Thirteenth Embodiment

A thirteenth embodiment of the invention corresponds to the invention of claim 13. The vehicle control device according to claim 1 to 12 further includes a communication unit which transmits a result of control performed by the control unit. In a case where there is a gap between the preceding vehicle behavior distribution information and the preceding vehicle actual behavior by the comparison unit, the communication unit further includes a process of communicating with additional information for the actual behavior information of the preceding vehicle.

As described in the effects of the invention of claim 12, the traffic conditions on a road is normally changed depending on weather, time zones, days of the weak, and event held nearby. In addition, in general, even a road usually used for commuting is also considered to be a traffic condition different from normal in a case where a business office irregularly sets holidays different from the days of the weak for example. In such a case, there is a possibility that the actual behavior information of the preceding vehicle does not follow the preceding vehicle behavior distribution information.

In addition, in a case where the traffic condition suddenly changes due to an accident, the updating of the preceding vehicle behavior distribution information may not catch up with the arrival of the host vehicle. In such a case, the preceding vehicle behavior distribution information does not follow the actual behavior information of the preceding vehicle. If such a case is extracted and, for example, reflected on the preceding vehicle behavior distribution information, the effects expected in the invention can be improved.

On the other hand, in general, when the travel history of the plurality of vehicles are collected to create the preceding vehicle behavior distribution information and a statistics operation is performed, it is considered that a case where the preceding vehicle behavior distribution information does not follow the actual behavior information of the preceding vehicle is less than a case where the preceding vehicle behavior distribution information follows the actual behavior information of the preceding vehicle. Therefore, the case may be hardly found due to a lot of information. Therefore, it is possible to avoid being buried in many pieces of information by collecting additional information when the preceding vehicle behavior distribution information does not follow the actual behavior information of the preceding vehicle, so as to extract a case where the preceding vehicle behavior distribution information does not follow the actual behavior information of the preceding vehicle.

In other words, according to the invention of claim 13, the vehicle control device further includes a communication unit which transmits a result of performed control. In a case where there is a gap between the preceding vehicle behavior distribution information and the preceding vehicle actual behavior by the comparison unit, the communication unit further includes a process of communicating with additional information for the actual behavior information of the preceding vehicle. With this configuration, information having a gap is easily found, and considered as an exception, so that it is possible to enhance the generality of the preceding vehicle behavior distribution information.

Fourteenth Embodiment

A fourteenth embodiment of the invention corresponds to the invention of claim 14. In the vehicle control device according to claim 13, the additional information for the actual behavior information of the preceding vehicle is any one of a preceding vehicle speed, a preceding vehicle acceleration, the inter-vehicle distance, the inter-vehicle time, a request braking and driving force of the host vehicle, and a captured image.

As described in the invention of claim 13, the preceding vehicle behavior distribution information is improved by analyzing a case where the preceding vehicle behavior distribution information does not follow the actual behavior information of the preceding vehicle. Further, as described in the invention of claim 12, it is possible to handle the updating of the preceding vehicle behavior distribution information which is provided in addition to the information "holidays different from the days of the weak for example". In such a case, the host vehicle which can acquire the actual preceding vehicle behavior information additionally acquires any one of the preceding vehicle speed, the preceding vehicle acceleration, the request braking and driving force of the host vehicle, and the captured image.

In a case where the preceding vehicle acquires the preceding vehicle speed to deviate from the preceding vehicle behavior distribution information and slows down, the cause of the deviation can be analyzed as accident congestion by referring to accident information and traffic congestion information near the point.

With the configuration of acquiring the preceding vehicle acceleration, it can be analyzed such that the preceding vehicle happens to meet a signal change to increase the acceleration to pass through in a hurry and thus deviate from the preceding vehicle behavior distribution information, or such that the preceding vehicle comes into conflict to the vehicle traveling therebefore and thus the acceleration is significantly reduced.

With the acquired request braking and driving force of the host vehicle, for example, it is possible to analyze that the vehicle tracks the preceding vehicle, a crew pushes the accelerator further during the control of the inertia traveling, or a related control is terminated due to a crew's interruption such braking.

In a case where a capturing unit such as a camera is provided as a unit of recognizing the front side of the host vehicle, an event can be acquired a video or an image. Therefore, it is possible to analyze the cause of an obstacle other than the preceding vehicle on a road surface which is not able to be analyzed by speed change or request braking and driving force change.

Hitherto, the embodiments of the invention have been described with the drawings. However, all the configurations are not necessarily included in the invention. The invention is not limited to the configurations of the above-described embodiments. Some of the configurations of a certain embodiment may be replaced with the configurations of the other embodiments, and the configurations of the other embodiments may be added, omitted, or replaced to the configurations of the subject embodiment as long as the features are not significantly changed

Reference Signs List

100 vehicle
110 engine
111 brake
112 transmission
113 wheel
114 clutch
115 differential mechanism
116 generator
120 engine control device
121 brake control device
122 transmission control device
123 acceleration/deceleration control device
124 telematics device
130 front recognition sensor
131 speed sensor
132 GPS sensor
133 rear recognition sensor
134 lateral recognition sensor
140 communication device
200 data center
1231 control unit
1232 preceding vehicle behavior comparison unit
1233 preceding vehicle behavior distribution information generating unit
1234 target driving force calculation unit
1235 target engine speed calculation unit
1236 target engine torque calculation unit
1237 target braking force calculation unit
1238 target clutch state calculation unit
1239 engine automatic stop calculation unit

**Claims**

1. A vehicle control device, comprising:

a vehicle behavior distribution information generating unit which generates preceding vehicle behavior distribution information in a given location on a road on the basis of travel histories of a plurality of vehicles;
a preceding vehicle actual behavior detection unit which detects actual behavior information of a preceding vehicle immediately ahead;
a comparison unit which compares the vehicle behavior distribution information and the actual behavior information of the preceding vehicle; and
a control unit which controls a host vehicle on the basis of a result of comparison of the comparison unit.

2. The vehicle control device according to claim 1,
wherein the control unit includes a process of controlling an engine drive force in a disconnection state in a case where a preceding vehicle actual behavior follows the preceding vehicle behavior distribution information on the basis of the result of comparison of the comparison unit.

3. The vehicle control device according to claim 2,
wherein the control unit further includes a process of stopping an engine in a case where a state that the preceding vehicle actual behavior follows the preceding vehicle behavior distribution information further continues on the basis of the result of comparison of the comparison unit.

4. The vehicle control device according to claim 1,
wherein the control unit corrects a drive force gain at a time of a tracking control to be small in a case where the preceding vehicle actual behavior follows the preceding vehicle behavior distribution information on the basis of the result of comparison of the comparison unit.

5. The vehicle control device according to claim 1,
wherein the control unit changes a control theory to keep a speed while continuing a tracking control in a case where the preceding vehicle actual behavior follows the preceding vehicle behavior distribution information on the basis of the result of comparison of the comparison unit.

6. The vehicle control device according to claim 1,
wherein the control unit resets a target power generating voltage of an in-vehicle generator to a high voltage in a case where the preceding vehicle actual behavior follows the preceding vehicle behavior distribution information on the basis of the result of comparison of the comparison unit, and an inter-vehicle distance or an inter-vehicle time to the preceding vehicle is less than a predetermined value, or a relative speed is equal to or more than a predetermined value.

7. The vehicle control device according to claim 1,
wherein a lateral vehicle detection unit is provided in a control target vehicle,
wherein the control unit keeps tracking the preceding vehicle in a case where the preceding vehicle actual behavior follows the preceding vehicle behavior distribution information, and a speed of a vehicle traveling on a lateral side and a relative speed of the host vehicle are equal to or more than a predetermined value on the basis of a detection result of the lateral vehicle detection unit and the vehicle traveling on the lateral side is at a higher speed.

8. The vehicle control device according to claim 1,
wherein a following vehicle detection unit is provided in a control target vehicle, and
wherein the control unit continues a preceding vehicle tracking control in a case where any one of an inter-vehicle time, a relative speed, and an inter-vehicle distance to a following vehicle is less than a predetermined value on the basis of a detection result of the following vehicle detection unit.

9. The vehicle control device according to claim 8,
wherein the control unit corrects the predetermined value to be reduced in a case where it is detected that the following vehicle is operated in an autopilot.

10. The vehicle control device according to any one of claims 1 to 3,
wherein an inter-vehicle communication unit is provided in a control target vehicle, and
wherein the control unit further includes a process of transmitting a sharing request for a travel plan in a case where communication with the preceding vehicle immediately ahead is able to be established by the inter-vehicle communication unit.

11. The vehicle control device according to claim 10,
wherein the control unit further include a process of transmitting the sharing request for the travel plan in a case where communication with a vehicle traveling behind the host vehicle is able to be established by the inter-vehicle communication unit.

12. The vehicle control device according to claim 1,
wherein the control unit further includes a process of acquiring update history information of the preceding vehicle behavior distribution information, and continues a preceding vehicle tracking control in a case where a predetermined period or more has elapsed after a latest update has been performed.

13. The vehicle control device according to claim 1, further comprising:

a communication unit which transmits a result of control performed by the control unit,
wherein the communication unit further includes a process of performing communication with additional information for the actual behavior information of the preceding vehicle in a case where there is a gap between the preceding vehicle behavior distribution information and the preceding vehicle actual behavior by the comparison unit.

14. The vehicle control device according to claim 13,
wherein the additional information for the actual behavior information of the preceding vehicle is any one of a preceding vehicle speed, a preceding vehicle acceleration, an inter-vehicle distance, an inter-vehicle time, a request braking and driving force of the host vehicle, and a captured image.

# FIG. 1

FIG. 2

# FIG. 3

# FIG. 4

START

S001
DETECT POSITION INFORMATION

S002
GENERATE PRECEDING VEHICLE
BEHAVIOR DISTRIBUTION INFORMATION

S003
ACQUIRE PRECEDING VEHICLE BEHAVIOR

S004
IS IT
RANGE OF BEHAVIOR
DISTRIBUTION?
YES          NO

S005
PERFORM CONTROL
BASED ON PREDICTION

S006
PERFORM TRACKING

RETURN

# FIG. 5

START

S101
DETECT POSITION INFORMATION

S102
COLLECT VEHICLE INFORMATION

S103
GENERATE TRANSMISSION DATA

S104
PERFORM TIME STAMP PROCESS

S105
ESTABLISH COMMUNICATION WITH
RECEIVING/TRANSMITTING MEANS

S106
TRANSMIT DATA

S107
DISCONNECT COMMUNICATION WITH
RECEIVING/TRANSMITTING MEANS

S108
STANDBY

RETURN

# FIG. 6

POSITION

SLOPE BETWEEN
TWO POINTS IS SPEED

TIME

POSITION

VEHICLE A

VEHICLE B

VEHICLE C

L: LENGTH OF SERIES
OF VEHICLES

T: TIME PERIOD DURING WHICH VEHICLE A STOPS   TIME

SPEED

SIGNAL

POSITION

POSITION OF
FINAL VEHICLE

# FIG. 7

START

S201
ACQUIRE PRECEDING VEHICLE
BEHAVIOR DISTRIBUTION INFORMATION

S202
ACQUIRE PRECEDING VEHICLE
DETECTION INFORMATION

S203
PREDICT PRECEDING VEHICLE BEHAVIOR

S204
IS IT PRECEDING
VEHICLE BEHAVIOR DISTRIBUTION,
AND IS THERE HIGHEST PROBABILITY OF
TRAVEL BEHAVIOR OF SPECIFIC
PURPOSE?

YES

NO

S205
PERFORM CONTROL
BASED ON PREDICTION

S206
CHANGE TO TRACKING

RETURN

# FIG. 8

# FIG. 9

SPEED PRECEDING VEHICLE

HOST VEHICLE

TIME

INTER-VEHICLE DISTANCE

T1          T2 T3          TIME

# FIG. 10

SPEED

TIME

INTER-VEHICLE
DISTANCE

T3          TIME

# FIG. 11

# FIG. 12

# FIG. 13

COMMUNICATION REQUEST

ACKNOWLEDGE

SHARING REQUEST OF TRAVEL PLAN

ACKNOWLEDGE

SHARING OF CONTINUING
COMMUNICATION
PROBABILITY AND PLAN

HOST VEHICLE

VEHICLE IMMEDIATELY
AHEAD OR BEHIND

# FIG. 14

COMMUNICATION REQUEST

NO RESPONSE

VEHICLE IMMEDIATELY AHEAD
OR BEHIND IS DETERMINED
AS VEHICLE WITH NO
COMMUNICATION MEANS

HOST VEHICLE

VEHICLE IMMEDIATELY
AHEAD OR BEHIND

## INTERNATIONAL SEARCH REPORT

International application No.

PCT/JP2017/045436

### A.    CLASSIFICATION OF SUBJECT MATTER

Int.Cl.    B60W3017(2012.01)i,    B60W30/18(2012.01)i,    B60W40/04(2006.01)i,
           G08G1/09(2006.01)i, G08G1/16(2006.01)i

According to International Patent Classification (IPC) or to both national classification and IPC

### B.    FIELDS SEARCHED

Minimum documentation searched (classification system followed by classification symbols)

Int.Cl. B60W30/17, B60W30/18, B60W40/04, G08G1/09, G08G1/16

| Documentation searched other than minimum documentation to the extent that such documents are included in the fields searched | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| X<br>Y | JP 2014-26539 A (TOYOTA MOTOR CORP.) 06 February 2014, paragraphs [0015]-[0024], [0031], [0034]-[0043], fig. 1-4 & US 9052997 B2 & US 2014/0032090 A1, paragraphs [0030]-[0039], [0046], [0049]-[0058], fig. 1-4 & DE 102013214328 A1 | 1-3, 5, 12-14<br>4, 6-11 |
| Y | JP 10-166894 A (MITSUBISHI ELECTRIC CORP.) 23 June 1998, paragraph [0071] (Family: none) | 4 |
| Y | JP 2016-96633 A (DENSO CORP.) 26 May 2016, paragraphs [0025]-[0028], fig. 4 & US 2016/0137067 A1, paragraphs [0039]-[0042], fig. 4 | 6 |
| Y | JP 2013-177054 A (NIPPON SOKEN, INC.) 09 September 2013, paragraphs [0045]-[0050], fig. 13-14 & US 9002614 B2 & US 2013/0226433 A1, paragraphs [0074]-[0079], fig. 13-14 & DE 102013101858 A1 | 7 |
| Y | JP 2010-52547 A (MAZDA MOTOR CORP.) 11 March 2010, paragraphs [0032], [0035], fig. 5(Family: none) | 8-9 |

☒    Further documents are listed in the continuation of Box C.          ☐    See patent family annex.

| | |
|---|---|
| *        Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| 27 March 2018 (27.03.2018) | 10 April 2018 (10.04.2018) |

| Name and mailing address of the ISA/<br>    Japan Patent Office<br>    3-4-3, Kasumigaseki, Chiyoda-ku,<br>    Tokyo 100-8915, Japan | Authorized officer |
|---|---|
| | Telephone No. |

Form PCT/ISA/210 (second sheet) (January 2015)

**INTERNATIONAL SEARCH REPORT**

International application No.

PCT/JP2017/045436

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 10-103982 A (HONDA MOTOR CO., LTD.) 24 April 1998, paragraph [0003] (Family: none) | 9 |
| Y | JP 10-105885 A (HONDA MOTOR CO., LTD.) 24 April 1998, paragraph [0006] (Family: none) | 10-11 |

Form PCT/ISA/210 (continuation of second sheet) (January 2015)

**EP 3 564 084 A1**

**Patent documents cited in the description**

- JP 2009113763 A
- JP 2014255320 A